Europäisches Patentamt

European Patent Office

Office européen des brevets

(11) Veröffentlichungsnummer : **0 027 828**
**B1**

(12) **EUROPÄISCHE PATENTSCHRIFT**

(45) Veröffentlichungstag der Patentschrift :
21.03.84

(21) Anmeldenummer : 79104122.1

(22) Anmeldetag : 24.10.79

(51) Int. Cl.³ : **C 21 D 9/30**, C 21 D 1/42

(54) **Induktor zum Aufheizen von rotierenden metallenen Werkstücken, insbesondere Kurbelwellen, zum Zweck der Oberflächenhärtung mit unterschiedlichen Einwirktiefen.**

(43) Veröffentlichungstag der Anmeldung :
06.05.81 Patentblatt 81/18

(45) Bekanntmachung des Hinweises auf die Patenterteilung : 21.03.84 Patentblatt 84/12

(84) Benannte Vertragsstaaten :
BE CH DE FR GB IT NL SE

(56) Entgegenhaltungen :
DE-A- 2 334 126
DE-B- 1 228 645
DE-B- 1 538 329
DE-B- 2 226 530
DE-B- 2 332 832
DE-C-  834 719
DE-C-  865 321
US-A- 3 272 954

(73) Patentinhaber : **Maschinenfabrik Alfing Kessler GmbH**
**Auguste-Kessler-Strasse Postfach 31 20**
**D-7080 Aalen 1 (DE)**

(72) Erfinder : **Regele, Paul**
**Vogtei-Strasse 4**
**D-7085 Bopfingen-Aufhausen (DE)**

## Induktor zum Aufheizen von rotierenden metallenen Werkstücken, insbesondere Kurbelwellen, zum Zweck der Oberflächenhärtung mit unterschiedlichen Einwirktiefen

Die Erfindung betrifft einen Induktor zum Aufheizen von länglichen rotierenden metallenen Werkstücken, insbesondere Kurbelwellen zum Zweck der Oberflächenhärtung von Laufflächen und Übergangsradien mit deren Schultern, bei denen Härteverfahren angewandt werden, die es ermöglichen, bei der Oberflächenhärtung unterschiedliche Einwirktiefen zu erzielen.

Härteverfahren zur Oberflächenhärtung von länglichen metallenen Werkstücken, insbesondere Kurbelwellen, beinhalten mehrere unterschiedliche induktive Aufheizungen, um an verschiedenen Stellen unterschiedliche Einwirktiefen zu erhalten. Zur Erreichung dieser Forderung kann es notwendig sein, verschiedene Induktoren zur Anwendung zu bringen, die unterschiedliche Heizbereiche haben. Eine weitere Forderung kann darin bestehen, Induktoren mit unterschiedlichen Heizbereichen kurzfristig im Wechsel zum Einsatz zu bringen, um den Ablauf von Wärme in benachbarte Zonen gezielt beeinflussen zu können.

Zur Erreichung dieses Zieles bieten Hersteller Härtemaschinen an, bei denen Induktoren aus Dreh- oder Reihen-magazinen nacheinander zum Einsatz gebracht werden können. Diese Systeme sind veröffentlicht in den Schriften DE-B 23 32 832 und DE-A 23 34 126. Die darin beschriebenen Systeme erfordern für den Wechsel eines Induktors mehr oder weniger viel Zeit, bedingt durch das Abfahren längerer Wege oder Ausführen von Schwenkbewegungen mit dazugehörigem Wechsel von Anschlüssen der Versorgungsleitungen. Diese zeitraubenden Vorgänge begrenzen die Anwendung der genannten Induktorsysteme bei Härteverfahren, zu deren Durchführung ein schneller Induktorwechsel erfoderlich ist.

In der DE-B 22 26 530 wird die Möglichkeit einer Induktoranordnung beschrieben, bei der zwei Induktoren gleichzeitig das zu erwärmende Teil umschließen, je einen steuerbaren Versorgungsanschluß haben, und somit in der Lage sind, partielle Einwirktiefen zu erzeugen. Die Voraussetzung für diese Möglichkeit ist allerdings, daß die Härtemaschine über zwei oder mehrere Versorgungsanlagen mit Anschlüssen für Elektrik und Kühlflüssigkeit verfügt. Dieser Aufwand ist sehr umfangreich und verteuert eine Härteanlage. Ein Induktor sollte also so beschaffen sein, daß er in Härtemaschinen mit nur je einem Anschluß für Strom und Kühlflüssigkeit verwendbar ist, wobei an bereits vorhandene Härtemaschinen gedacht ist.

Die Lösung dieser Aufgabe besteht nun darin, daß ein Induktor so gestaltet wird, daß er zwei oder mehrere hintereinander angeordnete unterschiedliche Heizbereiche aufweist, die vom gleichen Strom und von gleicher Kühlflüssigkeit durchflossen werden, und die in die jeweils benötigte Aufheizstellung durch Änderung der Drehrichtung des aufzuheizenden Werkstückes über Reibmitnahme oder durch zusätzliche Betätigungselemente bringbar sind.

Im ersteren Ausführungsfall besitzt der Induktor also zwei Heizbereiche, die durch Änderung der Drehrichtung betätigt werden, was durch die Umfangsreibung des auf Abstandsnocken auf dem Werkstück aufsitzenden Induktors bewirkt wird. Die Heizbereiche sind je in einer Viertelkreisform ausgebildet, die an einem Ende zusammenhängen und am anderen Ende über den Bereich des Durchmessers hinaus auseinandergezogen sind. Diese Form mit zwei Heizbereichen dürfte in der Praxis hauptsächlich zur Anwendung kommen.

Bei einer Ausführung mit mehr als zwei Heizbereichen muß der Induktor mit zusätzlichen Anschlägen versehen werden, die den jeweiligen Heizbereich in der Aufheizstellung halten. Diese Anschläge müssen im oder am Induktor angebracht sein, damit sie eventuelle Hubbewegungen des zu härtenden Werkstückes besser mitmachen können. Ihre Betätigung kann hydraulisch, pneumatisch oder mechanisch erfolgen. Bei Maschinen mit automatischem Programmablauf sollten diese Anschläge programmäßig steuerbar sein.

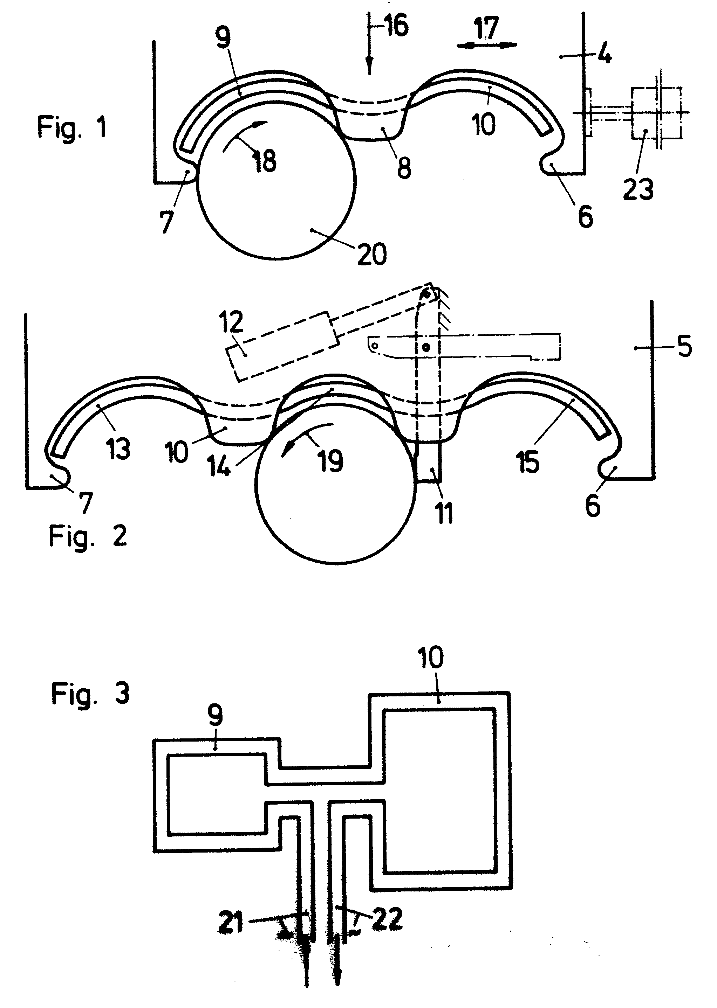

Die Anzahl der Heizbereiche dürfte sich nach den Erfordernissen des anzuwendenden Härteverfahrens richten, wobei das Anwachsen der Verlustleistungen der leer mitlaufenden Heizbereiche, im dargetellten Fall von Fig. 2 Bereich 13 und 15, mit in Betracht gezogen werden muß. Diese Verlustleistungen sind aber bei geringer Anzahl der Heizbereiche als gering anzusehen und rechtfertigen wirtschaftlich diese Induktorform gegenüber einer Härteanlage mit mehreren Versorgungsanschlüssen und mehreren Energieversorgungsanlagen.

In den folgenden Zeichnungen bedeuten :

Figur 1 Ansicht eines Induktors mit zwei Heizbereichen ;

Figur 2 Ansicht eines Induktors mit drei Heizbereichen ;

Figur 3 Darstellung eines Induktors mit unterschiedlichen Heizbereichen.

Wie aus Fig. 1 ersichtlich, wird der beweglich aufgehängte Induktor 4 durch die Frehrichtung 18 des Werkstücks 20 im linken Heizbereich 9 dadurch gehalten, daß der Induktor 4 über Reibmitnahme durch sein Gewicht in Richtung 16 den Nocken 7 über den Nocken 8 nach rechts — 17 — zur Anlage bringt. Bei Umkehr der Drehrichtung 18 wandert der Nocken 8 durch Reibmitnahme auf dem Werkstück 20 nach links und bringt den Nocken 6 im Heizbereich 10 zur Anlage. Ein schneller Wechsel des Heizbereichs wird also hierbei durch Drehrichtungsänderung des Werkstücks 20 erreicht.

Bei einem beweglich aufgehängten Induktor 5 mit mehreren Heizbereichen 13, 14 uns 15 gemäß Fig. 2 ist ein oder sind mehrere durch Elemente 12 betätigbare Zwischenanschläge 11 erforderlich, um den Induktor 5 beim Wechsel vom Heizbereich 13 in den Heizbereich 14 zu halten. Hierzu ist eine Drehrichtung des Werkstücks 20 in Richtung 19 erforderlich. Um den Heizbereich 15 in Wirkstellung zu bringen, ist die Drehrichtung 19 beizubehalten und der Anschlag 11 durch das Element 12 zu entfernen. Der Induktor 5 bewegt sich dann durch Reibmitnahme auf dem Werkstück 20 nach links bis zur Anlage des Nockens 6 am Werkstück 20.

Bei Bestehen einer Forderung nach schnellerem Wechsel des Heizbereichs ist die Anbringung eines Betätigungselementes 23 vorstellbar, das, mit Positionierungseinrichtungen versehen, den gewünschten Heizbereich 9, 10, 13, 14, 15 in Wirkstellung bringt.

Fig. 3 zeigt die unterschiedlichen Heizbereiche 9, 10 eines Induktors nach Fig. 1. Daraus ist ersichtlich, daß für die Versorgung des Induktors 4, mit elektrischer Energie und mit Kühlflüssigkeit für Zu- und Ableitung nur je ein Anschluß 21, 22 erforderlich ist.

**Ansprüche**

1. Induktor zum Aufheizen von länglichen rotierenden metallenen Werkstücken, insbesondere Kurbelwellen zum Zweck der Oberflächenhärtung von Laufflächen und Übergangsradien mit deren Schultern, bei denen Härteverfahren angewandt werden, die es ermöglichen, bei der Oberflächenhärtung unterschiedliche Einwirktiefen zu erzielen, dadurch gekennzeichnet, daß ein Induktor so gestaltet ist, daß er zwei oder mehrere hintereinander angeordnete unterschiedliche Heizbereiche aufweist, die vom gleichen Strom und von gleicher Kühlflüssigkeit durchflossen werden, und die in die jeweilig benötigte Aufheizstellung durch Änderung der Drehrichtung des aufzuheizstellung durch Änderung der Drehrichtung des aufzuheizenden Werkstückes über Reibmitnahme oder durch zusätzliche Betätigungselemente bringbar sind.

2. Induktor nach Anspruch 1, dadurch gekennzeichnet, daß für die elektrische Versorgung und der Versorgung mit Kühlflüssigkeit des Induktors nur je ein Anschluß für Zu- und Ableitung vorhanden ist.

3. Induktor nach Anspruch 1, dadurch gekennzeichnet, daß die Energiezufuhr für jeden Schleifenbereich im Zeitpunkt des Aufheizens gesondert regelbar ist.

4. Induktor nach Anspruch 1, dadurch gekennzeichnet, daß bei mehreren Heizbereichen zur Bestimmung der Aufheizstellung entfernbare Anschläge vorgesehen sind.

5. Induktor nach Anspruch 1, dadurch gekennzeichnet, daß zur Lagebestimmung des Induktors (4) bei zwei Heizbereichen (9, 10) zwei außenliegende feste Nocken (6, 7) vorgesehen sind, von denen einer bei der jeweiligen Drehrichtung (18) des Werkstückes (20) zur Anlage kommt.

6. Induktor nach Ansprüchen 1 und 4, dadurch gekennzeichnet, daß zur Lagebestimmung des Induktors (5) bei mindestens drei Heizbereichen (13, 14, 15) zwei außenliegende feste Nocken (6, 7) und mindestens ein beweglicher mittlerer Anschlag (11) vorgesehen sind, der durch kraftbetätligte Einrichtungen (12) bewegt wird und gegebenenfalls programmäßig steuerbar ist.

**Claims**

1. An inductor for heating elongated rotating metallic workpieces, especially crankshafts for the purpose of surface hardening of bearing surfaces and fillet radii with their shoulders used in conjunction with hardening processes which permit different depths of penetration to be achieved during surface hardening, characterized thereby that the inductor is designed in such a way as to have two or more different heating areas arranged to be in operation one after the other through wich flow the same current and the same cooling fluid and which are supplied to the required heating position by changing the direction of rotation of the workpiece to be heated via a friction drive or through additional actuating elements.

2. An inductor as in Claim 1, but characterized by the presence of only one terminal each for supply and discharge of the cooling fluid and electric power flow.

3. An inductor as in Claim 1, characterized by an individually controllable energy supply for each area of the inducing coil during the heating period.

4. An induktor as in Claim 1, characterized by being provided with removable spacer pads which are required for determining the heating position because of the several heating areas.

5. An inductor as in Claim 1, characterized thereby that for positioning the inductor (4) with two heating areas (9, 10), two external fixed positioning pads (6, 7) are provided of which one is in contact, depending on the particular direction of rotation (18) of the workpiece (20).

6. An induktor as in Claims 1 and 4, comprising for positioning the inductor (5) with at least three heating areas (13, 14, 15), two external fixed pads (6, 7) and at least one movable center spacer pad (11) which is moved by power driven devices (12) and, where appropriate, can be program controlled.

**Revendications**

1. Un inducteur pour chauffer des pièces en métal de forme oblongue en rotation, surtout des vilebrequins, ayant pour but de tremper la surface des portées et des congés avec leurs épaulements en appliquant des procédés qui permettent d'obtenir pendant la trempe superficielle de différentes profondeurs de pénétration, caractérisé en ce que l'inducteur est pourvu de deux ou plusieurs zones différentes de chauffage disposées pour être en fonction l'une après l'autre, par lesquelles passent le même courant et le même liquide de refroidissement, le courant et le liquide de refroidissement étant amenés à la position de chauffage désirée par changement du sens de rotation de la pièce à chauffer par moyen d'un entraînement par friction ou par des éléments supplémentaires d'actionnement.

2. Un inducteur selon revendication 1, caractérisé en ce que l'inducteur est pourvu seulement d'un raccordement pour amener et d'un raccordement pour décharger le liquide de refroidissement ainsi que pour le passage du courant.

3. Un inducteur selon revendication 1, caractérisé en ce que l'alimentation électrique de chacune des zones de boucle est réglable séparément au cours du chauffage.

4. Un inducteur selon revendication 1, caractérisé en ce que l'inducteur est pourvu de butées amovibles qui sont indispensables pour déterminer les positions de chauffage en raison de plusieurs zones de chauffement.

5. Un inducteur selon revendication 1, caractérisé en ce que l'inducteur (4), à deux zones de chauffement (9, 10), est pourvu de deux butées fixes d'extrémité (6, 7) dont une vient en contact avec la pièce en fonction du sens de rotation (18) de la pièce (20), ces butées étant nécessaires pour déterminer la position de l'inducteur.

6. Un inducteur selon revendications 1 et 4, caractérisé en ce que l'inducteur (5), à trois zones de chauffement (13, 14, 15) au moins, est pourvu de deux butées fixes d'extrémité (6, 7) et d'une butée mobile (11) au moins qui est actionnée par des mécanismes (12) avec une source de force, au besoin elle peut être actionnée par commande programmable, ces butées étant nécessaires pour déterminer la position de l'inducteur.

Fig. 1

Fig. 2

Fig. 3

1